# EUROPEAN PATENT APPLICATION

(11) **EP 2 942 986 A1**
(43) Date of publication of application: **11.11.2015**
(21) Application number: 14305682.8
(22) Date of filing: 09.05.2014
(51) Int. Cl.: H04W 4/00, H04W 60/00, H04W 72/04, H04W 28/02

(54) **Low complexity user equipment and their operation within wireless communication networks**

(71) Applicant: ALCATEL LUCENT, 92100 Boulogne-Billancourt (FR)
(72) Inventor: Lim, Seau Sian, Swindon, Wiltshire SN5 7DJ (GB); Palat, Sudeep, Swindon, Wiltshire SN5 7DJ (GB); Wong, Shin Horng, Swindon, Wiltshire SN5 7DJ (GB)
(74) Representative: Mills, Julia

(57) **Abstract**

A method of establishing a connection between a low complexity user equipment and a network node within a wireless communication network comprising the steps of: receiving information broadcast from the network node; determining from the information whether the network node is configured to support communications with the low complexity user equipment; in response to detecting that the network node is not configured to support the low complexity user equipment communication: selecting a reduced capability of the user equipment to transmit in a user capability message to the network node such that configuration information transmitted to the user equipment relating to the user equipment capability has a correspondingly reduced size; and transmitting the user capability message to the network node.

## Description

### FIELD OF THE INVENTION

The present invention relates to low complexity user equipment and in particular to their operation within wireless communication networks.

### BACKGROUND

User equipment that can communicate with other devices via a wireless communication network are known. Such devices can be used for very different applications and thus have very different requirements and capabilities. Low complexity or low cost user equipment (LC-UE) such as machine type communication ("MTC") devices are devices that are used by a machine for some specific applications. One example of such an LC MTC UE is a smart utility meter that communicates readings from the smart meter via the wireless communication network periodically. These devices may include devices referred to as category 0 or sometimes as category 11 devices in 3GPP.

Such devices are delay tolerant and do not require a high data throughput. Therefore, they can be designed with low complexity and correspondingly low costs. Typical characteristics of such devices may be a single receiver ("Rx") antenna; a maximum uplink and downlink transmission block size ("TBS") for unicast (data) of say 1000 bits, this amount being related to a correspondingly small buffer on the device.

One potential problem with configuring low complexity devices to have such characteristics is that legacy base stations would be unaware of such restrictions such that they would not be able to support communication with such devices. This could potentially limit the deployment of LC-UEs only to those cells that support them. Such a limitation may make it difficult to achieve an economy of scale for the LC- UEs and thereby difficult to obtain the low cost benefits.

It would be desirable for low complexity user equipment to be able to operate within the cells of legacy base stations that are not configured to support such devices.

### SUMMARY

A first aspect of the present invention provides a method of establishing a connection between a low complexity user equipment and a network node within a wireless communication network comprising the steps of: receiving information broadcast from said network node; determining from said information whether said network node is configured to support communications with said low complexity user equipment; in response to detecting that said network node is not configured to support said low complexity user equipment communication: selecting a reduced capability of said user equipment to transmit in a user capability message to said network node such that configuration information transmitted to said user equipment relating to said user equipment capability has a correspondingly reduced size; and transmitting said user capability message to said network node.

The inventors of the present invention recognised that although it would be desirable to be able to limit the capabilities of low complexity devices such that they can be built at lower cost, where such devices are operating in networks having legacy network nodes that are unaware of the limitations, problems in communication may arise. It addresses this problem by a LC-UE determining when establishing a connection to a network node whether the network node supports communication with a low complexity device and where it does not, then not transmitting its actual capabilities but rather transmitting a reduced capability, such that any information relating to the transmitted capabilities that are transmitted in response to this by the network node will be correspondingly reduced. By appropriate selection of the reduced capability, the configuration messages will be appropriate for the low complexity device, allowing it to communicate with a network node that is unaware that it is a low complexity device and therefore has certain restrictions on its communication.

Although the reduced capability may be a number of things in some embodiments the reduced capability comprises a subset of bands supported by said user equipment, said subset of bands including a band comprising a carrier frequency of said network node.

Network nodes may provide a number of potential communication bands in which they can communicate with user equipment similarly, user equipment are able to support a number of communication bands for communicating with network nodes. During a connection process the communication bands which the user equipment can support are signalled to the network node which replies with configuration information for these bands. This message can contain a lot of data and be very large. Low complexity user equipment with limited buffer sizes will not be able to successfully receive and decode such a message. In order to address this potential problem the user equipment may transmit a subset of bands that it can actually support such that the configuration information sent by the network in response is correspondingly reduced.

In some embodiments, said step of transmitting is performed in response to an enquiry received from said network node regarding a capability of said user equipment, said reduced capability being selected such that a response to said user equipment capability message has a correspondingly reduced size.

During establishment of a connection, the network node will request the user equipment capability and will respond to this with relevant configuration information. As this occurs early during connection there are limited possibilities prior to this to affect the information transmitted by the network node to make it appropriate to a low complexity device. Furthermore, the inventors of the present invention recognised that the configuration data sent in response to the user equipment capability message is generally large and not acceptable to a low complexity device. However, they also recognised that the data sent is dependent on the capability of the user equipment and thus, sending a reduced capability, such as a subset of communication bands, will reduce the size of the response by a corresponding amount and thus, appropriate selection of the reduction can allow the response to be within limits appropriate for a low complexity device.

It should be noted that once a connection is established there may be other mechanisms that can be used for controlling the communications sent by the network node such that they are appropriate to a low complexity user equipment. For example, co-pending application PCT/CN2014/073910 filed on 21 March 2014 in the name of Alcatel Lucent discloses a way of controlling the size of downlink and uplink messages by reporting a CQI (channel quality indicator) measurement that is low enough such that the TBS size in the assignment is less than the desired size and/or by reporting buffer status (BSR) to be less than the desired size.

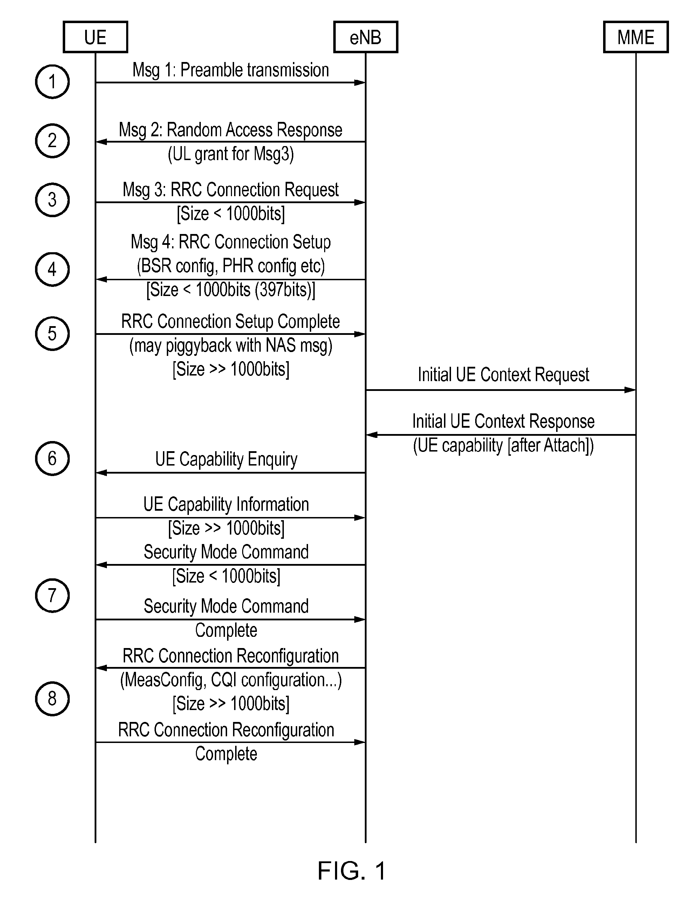

To use the above mechanism, CQI and BSR reporting needs to be configured by the network before any messages that might contravene the requirements are sent. For Buffer Staus Reporting (BSR), this is configured typically early in a connection for example in message 4 (RRC Connection Setup message) in Figure 1. However, the CQI reporting is only configured in the RRC Connection Reconfiguration message after the UE capability is known to the eNB as the CQI measurement depends on the capability of the UE. Thus, the response to the UE capability message might exceed that which is acceptable to a low complexity user equipment unless the user equipment transmits a reduced capability message.

In some embodiments, said step of selecting said reduced capability comprises selecting a subset of bands supported by said user equipment such that said response comprising configuration information of said subset of bands is less than a predetermined size.

Where the reduced capability is a subset of communication bands supported by the user equipment, then this subset of band is selected such that the response from the network node comprising the configuration information for the subset of bands is less than a predetermined size. In this regard, the typical size of configuration information for communication bands is known and thus, when selecting a subset of bands, this can be done in order to ensure that the configuration information received for the subset will be less than a size that the low complexity user equipment can deal with.

In some embodiments, said predetermined size is at least one of a buffer size of said user equipment and 1000, 1500, 2000, 2500, 5000 and 8000 bits.

Low complexity user equipment may be configured to transmit and receive communications that are less than a predetermined size which may be determined by the buffer size of the user equipment and may in some embodiments be less than any one of 1000, 1500, 2000, 2500, 5000 and 8000 bits.

In some embodiments, said step of selecting a subset of bands comprises: not selecting at least one of carrier aggregation and inter-RAT band combinations.

The subset of bands that are selected are selected to reduce the size of the message sending configuration information for those bands. As low complexity user equipment do not generally require high data rates, then communication bands that are configured to transmit high data rates such as carrier aggregation and inter RAT band combinations are not required by these low complexity user equipment and thus, it is advantageous if these are not selected in the subset of bands transmitted to the network node.

In some embodiments, the method comprises in response to detecting a target cell and prior to leaving a cell of said network node performing a detach procedure whereby a connection to said wireless communication network is released and said user equipment capability stored in said wireless communication network is cleared.

Although, transmitting reduced user equipment capability to a network node addresses the problem of configuration information relating to the user equipment capability being too large for low complexity user equipment to deal with, where the user equipment moves to a new cell then this reduced capability information may not be appropriate for the new cell and problems may arise. In order to address these problems it may be advantageous if prior to leaving a cell of the network node where reduced capability has been transmitted, a detach procedure is performed such that the user equipment capability stored in the wireless communication network is cleared. This may be done where the user equipment is currently connected to the wireless communication network and is performing a handover between cells or where it is in idle mode but has previously been attached such that information relating to the user equipment is stored in the wireless communication network. In either case, it maybe advantageous to clear this user equipment capability where it is not the true user equipment capability but is a reduced user equipment capability that has been transmitted to avoid a legacy network node transmitting a signal that is too large for the low complexity user equipment to deal with. In this way, inappropriate user equipment capability is cleared from the system. It should be noted that where a user equipment is travelling from a cell that supports low complexity user equipment to another supporting cell then the problem of inappropriate user equipment capability being stored does not arise and there is no need in this case for the user equipment to detach from the network prior to leaving the cell.

In some embodiments, the method comprises, following performing said detach procedure, performing said steps of said method according to a first aspect of the present invention at a network node of said target cell, and in response to detecting that said network node does support said communication of said low complexity user equipment transmitting a full capability of said user equipment to said network node. On entering the target cell and having detached from the wireless communication network, the user equipment may establish a connection with the network node of the target cell and where it does not support a low complexity user equipment, it will transmit a reduced capability, however where it does support the low complexity user equipment it can transmit its actual capability as the network node will be configured to respond to the user equipment capability in a way that the low complexity user equipment is able to support.

In some embodiments, the method comprises, in response to detecting a target cell, performing an attach procedure to attach to a network node of said target cell, said attach procedure comprising transmitting user equipment capability to said network node of said target cell.

In some embodiments, an attach procedure may be performed with the new network node without detaching from the previous network node, the attach procedure being performed using an established communication link. This fresh attach procedure will include transmitting a full user equipment capability to the network node of the target cell and will thus serve to update the user equipment capability stored in the wireless communication network. Where the target cell supports low complexity user equipment then the full user capability will be transmitted.

In some cases, rather than performing an attach procedure while connected, it will be performed following a detach signal that has been sent by the user equipment so that the user equipment is detached from the wireless communication network before a new attach signal is transmitted. In such a case a new connection will need to be performed and thus, a reduced capability may need to be sent where the target cell does not support low complexity user equipment.

In some embodiments, said step of detecting said target cell comprises detecting a carrier signal from said target cell in a frequency associated with a band outside of said reduced user equipment capability, and said step of performing said attach procedure comprises transmitting an updated user equipment capability to said new network node comprising a band that includes said frequency of said carrier signal.

Where the user equipment has connected to a network node and has transmitted a reduced capability that does not reflect its actual capability, then where it detects a target cell transmitting a carrier signal in a frequency associated with a band outside of its reduced capability it will not be able to perform a handover without updating the user equipment capability that the wireless communication network has stored for this particular user equipment. Therefore, once it has detected this carrier signal, it will perform an attach procedure to update the user equipment capability stored on the wireless communication network to include the serving cell band of the new network node. Prior to performing this attach procedure, it may in some embodiments perform a detach procedure depending on the particular configuration of the system.

In some embodiments, the method comprises, following handover to a new network node, determining whether said new network node is configured to support communication with low complexity user equipment and if so, performing an attach procedure to said new network node, said attach procedure comprising transmitting full user equipment capability.

In some cases, handover to a new network node occurs while the user equipment is still connected to the wireless communication network and in such a case following handover, the user equipment will determine if the new network node is configured to support communication with low complexity user equipment and if it is, it will perform an attach procedure in order to update the user equipment capability stored at the new network node to the full user equipment capability such that the new network node which is configured to support low complexity user equipment is aware of its full capability and can select channels appropriately.

In some embodiments, the attach procedure is performed following a detach procedure such that on handover having determined that the new network node supports low complexity user equipment, the user equipment detaches from the network and then attaches.

A second aspect of the present invention provides a computer program which when executed by computer is operable to control said computer to perform steps in the method according to the first aspect of the present invention.

A third aspect of the present invention provides a low complexity user equipment comprising: a receiver for receiving information broadcast from a network node; determination circuitry operable to determine from said information whether said network node is configured to support communications with said low complexity user equipment; control circuitry operable in response to detecting that said network node is not configured to support said low complexity user equipment communication to select a reduced capability of said user equipment to transmit in a user capability message to said network node such that configuration information transmitted to said user equipment relating to said user equipment capability has a correspondingly reduced size; and transmission circuitry for transmitting said user capability message to said network node.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a procedure for establishing a connection between a user equipment and a base station;
Figure 2 shows a wireless communication network according to an embodiment of the present invention;
Figure 3 shows signals transmitted between a user equipment and wireless communication network;
Figure 4 shows steps in a method performed by a low complexity user equipment when moving between cells in idle mode according to an embodiment of the present invention;
Figure 5 shows steps in a method performed by a low complexity user equipment when connected to a network and moving between cells;
Figure 6 is a schematic flowchart of a method for use in an LC-MTC UE according to a related technique;
Figure 7 is a schematic flowchart of a method for use in an LC-MTC UE according to related technique;
Figure 8 is a schematic block diagram depicting an apparatus for use in an LC-MTC UE according to a related technique; and
Figure 9 is a schematic block diagram depicting an apparatus for use in an LC-MTC UE according to another technique.

### DESCRIPTION OF THE EMBODIMENTS

Before discussing the embodiments in any more detail, first an overview will be provided.

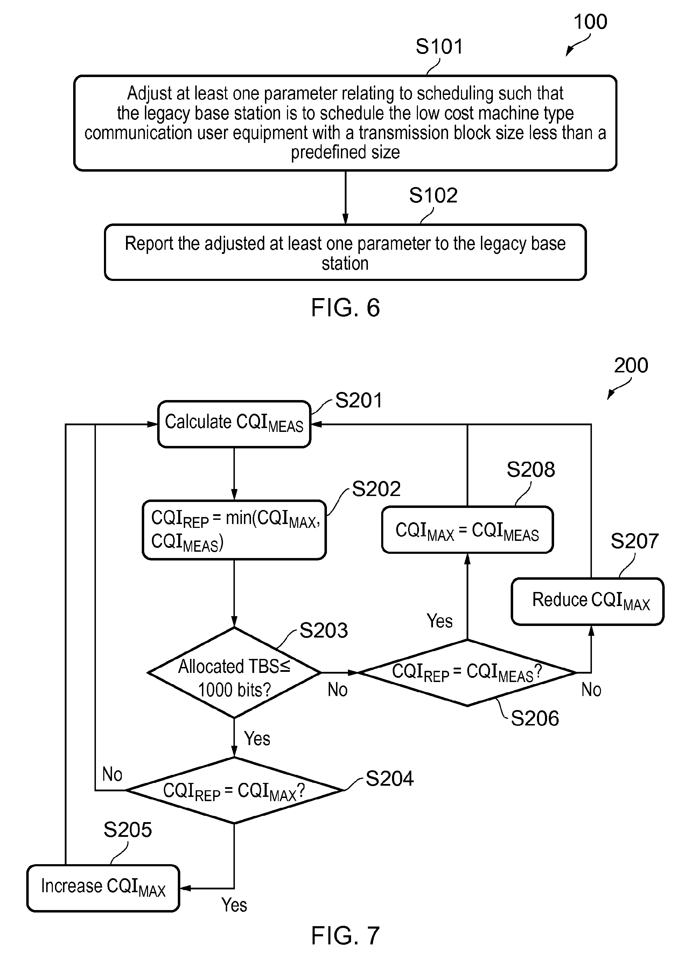

The signalling flow in Figure 1 shows the procedure for establishing a connection between a user equipment and a base station. From the diagram, it can be seen that Steps 5, 6 and 8 may have a large transmission block size TBS, in this case more than 1000 bits. Steps 5 and 6 relate to uplink messages and can be resolved by using a low buffer size report as is described in co-pending application PCT/CN2014/073910 filed on 21 March 2014 to Alcatel Lucent and discussed later with regard to Figures 6 to 9. However, Step 8 (which is performed after UE capability information is received) may have RRC Connection Reconfiguration which is a downlink communication with TBS size > 1000bits. As the UE is not configured with CQI (channel quality information) reporting at this point, one cannot address the problem using this mechanism. Thus, this problem has been addressed by embodiments of the present invention by providing a reduced user equipment capability to the network node, such that a corresponding reduction in the configuration information sent in response is achieved. In this way the response can be limited to a required size and although the network node is unaware of the full capability of the user equipment it has sufficient information to generate a connection.

In effect as the size of RRC Connection Reconfiguration message in Step 8 depends on the UE capability information in Step 6, the UE capability information in Step 6 is manipulated to reduce the size of the reconfiguration message in Step 8.

The user equipment capability stored by the wireless communication network can be updated later using attach or detach signals in which user equipment capability stored on the network is cleared and/or updated.

In this way a method is proposed by which the UE can control the size of not only its own RRC messages sizes but also the RRC configuration message sizes provided by network to a size that the UE can support. It does this by manipulating the UE capability information in such a way (i.e. restricting its capability) as to ensure that the RRC message sizes are limited in size to what can be supported and by using a Detach/ Attach procedure to update the UE capability when the previously reported capability is invalid. This could arise when the network environment changes such that the frequencies provided by the network are different or the supported message size changes.

Today's legacy network configures the UE measurements based on the bands supported by the UE and the network. If the UE reports that all the bands are supported, it is possible that the network will configure the UE with measurement objects for many frequencies and such measurement configuration could exceed what a low complexity MTC UE can receive. To allow these LC MTC devices to connect to a legacy network, the LC MTC device can limit the number of bands it indicates to the network such that the network will then only configure fewer (or no) measurement objects in the subsequent RRC Reconfiguration message providing the measurement configuration.

Example RRC messages where this can be applied are UE capability Information or Connection Reconfiguration message from a legacy eNB, which in some cases are required to be less than 1000bits for LC MTC devices.

UE Capability Information may include the following band indication capability:
- Number of EUTRAN bands supported
- Number of UTRAN FDD bands supported
- Number of UTRAN TDD bands supported
- Number of GERAN bands supported
- Number of HRPD bands supported
- CA band combination supported

Based on this capability information from the UE together with the operator's supported band and RATx (radio access technology), the eNB will create the measurement configuration settings of the UE and such configuration may make the size of the RRC Connection Reconfiguration message greater than 1000bits. By removing the inter-RAT and CA (carrier aggregation) band combination supported and reducing the number of EUTRAN bands supported to just the serving band, the message size can be limited to below 1000bits. Within a EUTRAN band, the UE can monitor up to 3 frequencies. The size of RRC Connection Reconfiguration message becomes <1000 bits.

An issue with manipulating the UE capability information is that it may create some misalignment between the stored UE capability in the network and the UE's real capability. UE capability information is stored in the core network MME/CN once the UE is attached to the network. In idle mode, a UE may perform cell selection/ reselection based on its real capability and may camp on cell where the band is not reported as supported. When the UE enters RRC Connected in the cell, the eNB will receive the UE capability information from the MME/ CN and the eNB will find the misalignment. This may cause call drop. The following further embodiments help avoid this misalignment occurring.

For an idle mode UE: when the best cell after cell reselection or the cell selected after cell selection belongs to a legacy eNB (i.e. eNB does not indicate that it supports LC MTC UEs), the UE may perform detach (if attach has been performed before). This will cause any UE capability that has been stored in the MME after attach to be deleted (e.g. the UE may (re)select to a cell supporting LC MTC UE or to another cell belonging to a legacy eNB using different serving band etc.). This will remove any misalignment between the UE and the eNB (e.g. UE previously informs the network that it supports only band X but then reselects to a cell that uses band Yetc.).

When the UE in RRC Connected mode being served by a cell belonging to a legacy eNB detects that the current serving cell is no longer the best cell and needs to handover to another target cell, it may also need to perform a new Attach (i.e. NAS (non-access stratum) Detach and Attach). One approach is that the UE will always NAS Detach and Attach before sending the measurement report. Alternatively, it may wait until after the handover is successfully completed. Once the handover is completed, the UE checks whether the cell supports LC MTC UE to decide whether to perform NAS Detach to remove the stored UE capability as the target cell may support LC MTC UE. The following is the logic:

| **Source cell capability** | **Target cell capability** | **To perform NAS Detach** |
|---|---|---|
| Support LC MTC | Support LC MTC | No |
| Support LC MTC | Does not support LC MTC | Yes |
| Does not support LC MTC | Support LC MTC | Yes |
| Does not support LC MTC | Does not support LC MTC | Yes |

In summary, the UE should update its stored capabilities perhaps by performing NAS Detach and Attach when switching from or to a cell that does not supports LC MTC. Only when switching between cells that support low complexity devices is this not required.

When the UE in RRC-Connected moves to a frequency band that is outside of the reported bands, UE will have a radio link failure since the network is unaware that the UE supports any other bands and will not be able to perform a handover HO. The UE then autonomously releases the RRC connection and detach procedure. It then performs an Attach procedure in the new frequency band and provides an updated UE capability to include the serving cell band.

Another option, is for the UE to skip the Detach procedure and directly perform a fresh Attach which will also clear the previously stored UE capability in the MME.

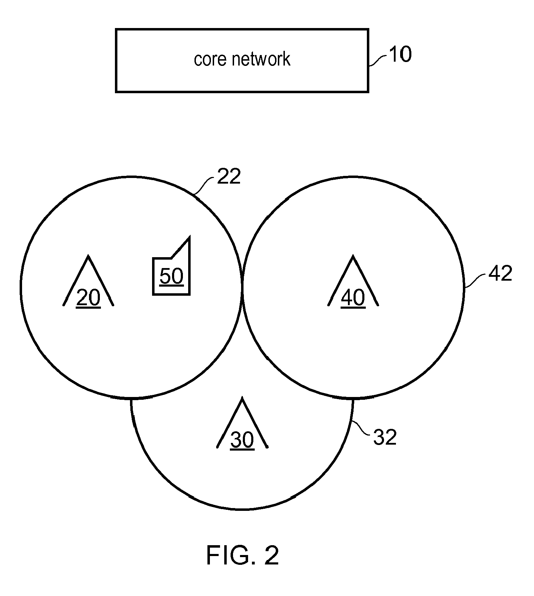

Figure 2 shows a wireless communication network according to an embodiment of the present invention. The wireless communication network comprises a network node 20 that provides radio coverage within a network cell 22. Network node 20 is a legacy network node that does not support low complexity user equipment. Low complexity user equipment 50 is located within radio cell 22 of network node 20 and user equipment 50 will detect from signals broadcast by network node 20 that it is a legacy network node and thus, it should not transmit user equipment capability information indicating that it is a low complexity device as a legacy network node will not be able to decode this information. It also recognises that it should not try to connect to network node 20 in a conventional manner, as it may receive signals that it cannot process. Therefore, when establishing a connection using a RRC connection process such as shown in Figure 1, it will transmit UE capability information in step 6 which is not c0omplete for the user equipment 50 but is a subset of its real user equipment capability such that the configuration information that it receives in response to this during message 8, is also a subset of the configuration information it would receive had it sent the full capability. This enables the user equipment to receive reduced sized messages that it can process. In this way, it connects to network node 20 which is a legacy network node even though it is a low complexity device.

One drawback of the connection is that the user equipment capability that network node 20 stores for user equipment 50 is not accurate but is a subset of its real capability. Network node 20 does not just store this information locally, it transmits the information to the core network 10 which controls base stations 30 and 40 and thus, these base stations will also believe that the user equipment 50 has this reduced capability.

In this embodiment, network node 30 and network node 40 are both network nodes that support low complexity devices within their corresponding radio cells 32 and 42. When user equipment 50 moves to one of these cells, then the user equipment capability should be updated such that the network nodes recognises the full capability of user equipment 50. Thus, when switching between these cells, user equipment 50 may perform an attach procedure to attach to the new network node and during this procedure updated user equipment capability information is transmitted and the information for this user equipment is updated. In other embodiments, prior to attaching a detach signal will be sent and the connection to the network will be lost and the user equipment capability information will be cleared and then updated as the user equipment connects to the new cell.

If user equipment 50 is in idle mode when it moves between the cells, then again the user equipment capability should be updated and a detach signal may be transmitted such that the user equipment capability information stored in the core network is cleared. It should be noted that if later user equipment 50 moves between cells 32 and 42, both of these cells can support low complexity user equipment and the user equipment capability stored in the network does not need updating and thus, no attach or detach procedure is required.

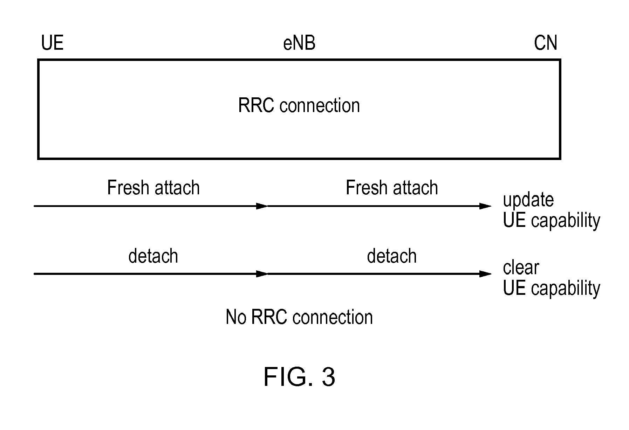

Figure 3 schematically shows signals passing between user equipment base stations and a core network when a user equipment is connected to the core network. Thus, when a connection has been established and an attach signal is submitted, it can be transmitted along links that have already been established. Thus, it can travel along existing links to the base station and to the core network and the user equipment capability that is stored in these devices can be updated. Similarly, where the user equipment is designed to detach from the network, this signal too can be sent along existing links and the user equipment capability stored in the network will be cleared. Thereafter, the RRC connection will be lost.

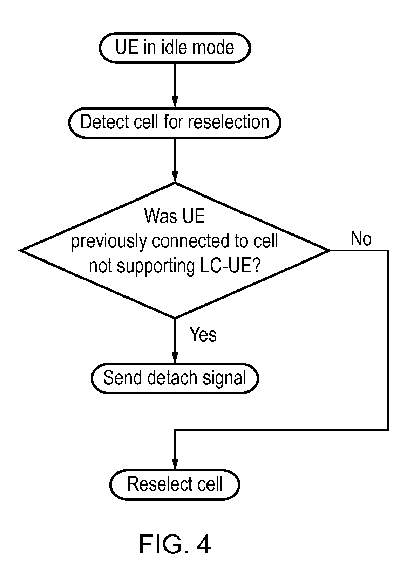

Figure 4 shows steps in a method performed by a low complexity user equipment moving between cells in idle mode according to an embodiment of the present invention. The user equipment detects a cell for reselection and determines if it was previously connected to a cell that does not support low complexity user equipment such that user equipment capability stored by the network will be the reduced capability and if so, it transmits a detach signal to detach it from the wireless communication network, whereupon any stored user equipment capability information is cleared. If it was previously connected to a cell that supports low complexity user equipment then it can simply reselect the cell. It should be noted that although in this embodiment the user equipment detaches from the cell to clear the user equipment capability before connecting again, in other embodiments it may simply perform a fresh attach to the target cell during which procedure it will transmit user equipment capability to the target cell and the user equipment capability stored in the network will be updated.

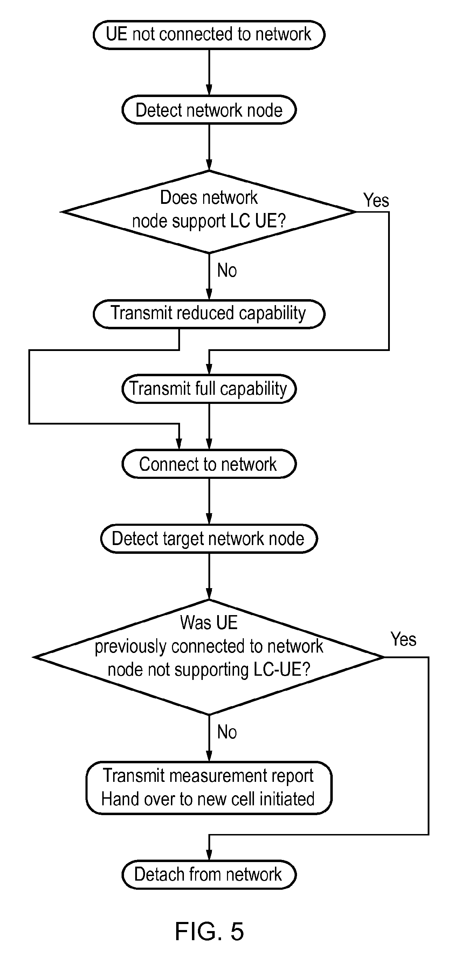

Figure 5 shows steps in a method performed by a low complexity user equipment connecting to a network and moving between cells. Here the user equipment will detect a network node and determine whether the network node supports low complexity user equipment or not. If it does, then it will transmit its user equipment capability to the network node and will connect to it. If it does not, it will transmit reduced user equipment capability to the network and will connect to the network node.

It then detects the carrier signal of a target network node suitable for handover. If the current cell supports LC-UEs then it will transmit the measurement report and a handover will be performed. If following the handover it determines that the new cell does not support LC-UEs then it may detach from the network and attach again.

If the current cell does not support LC-UEs then the UE will detach from the network and will reconnect to the new cell transmitting reduced user equipment capability information during the connection process. Here as in the figure 4 embodiment the user equipment detaches from the cell to clear the user equipment capability. In other embodiments the user equipment may not detach but may simply perform a fresh attach to the new cell during which procedure it will transmit user equipment capability to the target cell and the user equipment capability stored in the network will be updated.

Figure 6 is a schematic flowchart of a method 100 for use in an LC-MTC UE. As illustrated in Figure 6, at S101, the method 100 adjusts at least one parameter relating to scheduling such that the legacy base station is to schedule the LC-MTC UE with a TBS less than a predefined size. In one embodiment, the predefined size is a size of 1000 bits, that is, the LC-MTC UE TBS restriction as mentioned before. Then, at S102, the method 100 reports the adjusted at least one parameter to the legacy base station.

In an example embodiment, the at least one parameter is a CQI. In a further example embodiment, the adjusting at S101 comprises dynamically adjusting a value of the CQI according to a maximum value, wherein the maximum value is adapted based on whether the legacy base station has scheduled the LC-MTC UE with the TBS greater than the predefined size or less than the predefined size, as will be discussed in detail in reference to Figure 7.

In particular, for the downlink, the dynamic adjusting at S101 may be performed on the LC-MTC UE's reported CQI. Because the CQI is an indication of the LC-MTC UE's radio condition, most eNB schedulers may use the CQIs to determine the modulation and coding schemes ("MCSs") and thereby select proper TBSs for the LC-MTC UEs. According to the present disclosure, a maximum CQI, denoted as CQI_{MAX}, may be imposed such that the reported CQI cannot exceed this CQI_{MAX}. The CQI_{MAX} herein may not be constant but dynamically adapted. For instance, the LC-MTC UE may proceed with a low CQI_{MAX} and slowly increase the CQI_{MAX} to either its actual measured CQI value or to a value leading to TBS being greater than 1000 bits. Whenever the TBS is greater than 1000 bits, the LC-MTC UE may reduce CQI_{MAX} by a certain value (for example, one predefined step size). Additionally or alternatively, the LC-MTC UE may begin with setting CQI_{MAX} = actual measured CQI value and then reduce its CQI_{MAX} until the legacy base station allocates a TBS less than 1000 bits.
In an example embodiment, the at least one parameter is a buffer size value in a buffer status report. In a further example embodiment, the adjusting at S101 comprises adjusting the buffer size value such that the buffer size value is not greater than a predefined maximum value.

In particular, for the uplink, the dynamic adjusting at S101 is performed on a buffer size value in a buffer status report (BSR). For example, the LC-MTC UE may impose a maximum limit on the buffer size value such that the legacy base station does not allocate physical uplink sharing channel ("PUSCH") resource(s) that lead to a TBS being greater than 1000 bits. For example, the reported buffer size value could be selected each time by the LC-MTC UE from a less one of the number of data bits currently in the buffer and 1000 bits.

In another example embodiment, the at least one parameter is a power headroom value. In a further example embodiment, the adjusting at S101 comprises adjusting the power headroom value according to a reference signal received power measurement such that the legacy base station is to schedule physical uplink sharing channel resources that lead to the TBS less than the predefined size. For example, if the scheduled TBS larger than 1000 bits, then the LC-MTC UE may report a negative power headroom value to the legacy base station.

In an example embodiment, the method 100 further reports capability category one to the legacy base station if an indication of whether the legacy base station supports communication with the LC-MTC UE has not been received. In other words, when the LC-MTC UE does not receive an indication that the cell supports the LC MTC, they may report their respective capability categories of category one to the legacy base station. Thereby, the legacy base station can recognize this type of UE and may not use spatial multiplexing and may apply the aforementioned dynamic adjusting.

By virtue of the method 100 and its several variants or improvements as set forth in the above examples, the TBS restrictions associated with the LC-MTC UE could be eliminated, making it possible for the LC-MTC UE to operate in the coverage area of the legacy base station.

Figure 7 is a schematic flowchart of a method 200 for use in an LC-MTC UE according to the present disclosure. In particular, Figure 7 illustrates a potential CQI adjusting approach where a maximum CQI is adapted based on the base station scheduling. For simplification, the maximum CQI is denoted as CQI_{MAX}, the measured CQI is denoted as CQI_{MEAS}, and the reported CQI is denoted as CQI_{REP}.

As illustrated in Figure 7, the method 200 begins at S201, at which, the method 200 calculates a CQI based on the channel measurements to obtain the CQI_{MEAS}. Then, at S202, the method 200 determines the CQI_{REP} based on the following equation: CQI_{REP} = min (CQI_{MAX}, CQI_{MEAS}), wherein min( ) means that CQI_{REP} takes a less one of the CQI_{MAX} and CQI_{MEAS}.

Although not depicted in Figure 7, the LC-MTC UE may report the CQI_{REP} to the legacy base station and then decode physical downlink control channel ("PDCCH") transmission to determine the allocated TBS from the legacy base station. Then, at S203, the method 200 determines whether the allocated TBS is less than or equal to 1000 bits. If this is the case, then flow advances to S204, at which it is further determined whether the CQI_{MAX} is equal to CQI_{REP}. If the answer is "Yes," then at S205, the method 200 increases the CQI_{MAX}, e.g., by one step size, such as 1 CQI index. Otherwise, if the answer at S204 is "No," then the flow may loop back to S201 for a next round of reporting and adjusting.

If it is determined, at S203, that the allocated TBS is greater than 1000 bits, then the flow proceeds to S206, at which, it is further determined whether the CQI_{REP} is equal to CQI_{MEAS}. If this is the case, then at S208, the method 200 lets the CQI_{MAX} to take the value of the CQI_{MEAS} and returns to S201. If this is not the case, then at S207, the method 200 reduces the CQI_{MAX}, e.g., by one step size, and then returns to S201.
From the above description made with reference to Figure 7, it is to be understood that the reported CQI according to the present disclosure may be adjusted dynamically. Thereby, the reported CQI could be more accurate and thus the legacy base station could make more proper scheduling for the LC-MTC UE.

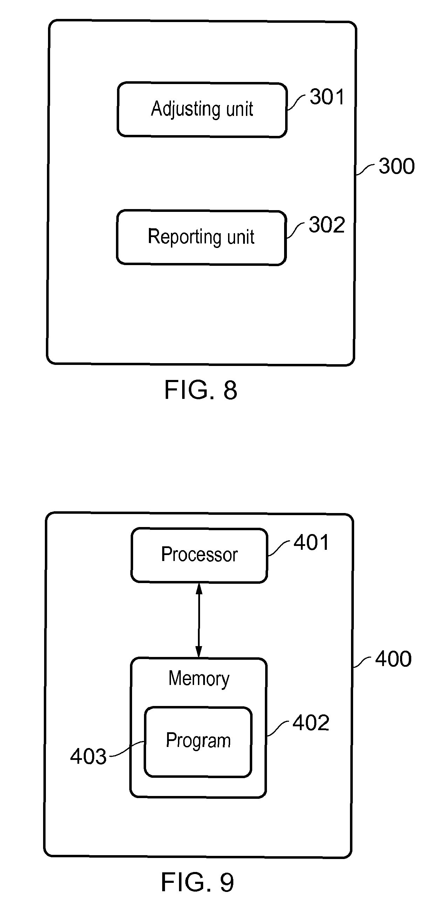

Figure 8 is a schematic block diagram depicting an apparatus 300 for use in an LC-MTC UE according to an embodiment of the present disclosure. As illustrated in Figure 8, the apparatus 300 comprises an adjusting unit 301 configured to adjust at least one parameter relating to scheduling such that the legacy base station is to schedule the LC-MTC UE with a TBS less than a predefined size. The apparatus 300 also comprises a reporting unit 302 configured to report the adjusted at least one parameter to the legacy base station.

In an example, the predefined size is a size of 1000 bits.

In another example, the at least one parameter is a channel quality indicator. In a further example, the adjusting unit 301 is configured to dynamically adjust a value of the channel quality indicator according to a maximum value, wherein the maximum value is adapted based on whether the legacy base station has scheduled the LC-MTC UE with the TBS greater than the predefined size or less than the predefined size.
In an example embodiment, the at least one parameter is a buffer size value in a buffer status report. In a further example embodiment, the adjusting unit 301 is configured to adjust the buffer size value such that the buffer size value is not greater than a predefined maximum value.

In an example, the at least one parameter is a power headroom value. In a further example, the adjusting unit 301 is configured to adjust the power headroom value according to a reference signal received power measurement such that the legacy base station is to schedule physical uplink sharing channel resources that lead to the TBS less than the predefined size.

In some examples, the reporting unit 302 is configured to report capability category one to the legacy base station if an indication of whether the legacy base station supports communication with the LC-MTC UE has not been received.

From the above descriptions, it is to be understood that the apparatus 300 is capable of performing the methods 100 and 200 and their variants and extensions as discussed in relevant example embodiments as before. Further, the apparatus 300 may be embodied as an LC-MTC UE or a part thereof.

Figure 9 is a schematic block diagram depicting an apparatus 400 for use in an LC-MTC UE according to another embodiment of the present disclosure. As illustrated in Figure 9, the apparatus 400 includes at least one processor 401, such as a data processor, at least one memory (MEM) 402 coupled to the processor 401. Depending on different implementations, although not shown, the apparatus 400 may further include a suitable RF transmitter TX and receiver RX coupled to the processor 401 so as to establish wireless connections with other nodes in the wireless network, e.g., the legacy base station or eNB in the present disclosure. The MEM 402 stores a program (PROG) 403. A combination of the processor 401 and the memory 402 forms processing means adapted to perform the present disclosure. The apparatus 400 may be coupled via a data path to one or more external networks or systems, such as the internet, for example.

The PROG 403 is assumed to include instructions that, when executed by the processor 401, enable the apparatus 400 to operate in accordance with the exemplary the present disclosure, as discussed herein with the methods 100, 200 and their respective variants and extensions as discussed in example the present disclosure. Similar to the apparatus 300, it is to be understood that the apparatus 400 is also capable of performing the methods 100 and 200 and their variants and extensions as discussed in relevant example embodiments as before. Further, the apparatus 400 may be embodied as an LC-MTC UE or a part thereof.

In general, the present disclosure may be implemented by computer software executable by at least one processor 401 of the apparatus 400, or by hardware, or by a combination of software and hardware.

The MEM 402 may be of any type suitable to the local technical environment and may be implemented using any suitable data storage technology, such as semiconductor based memory devices, magnetic memory devices and systems, optical memory devices and systems, fixed memory and removable memory, as non-limiting examples. While only one MEM is shown in the apparatus 400, there may be several physically distinct memory units in the apparatus 400. The processor 401 may be of any type suitable to the local technical environment, and may include one or more of general purpose computers, special purpose computers, microprocessors, digital signal processors (DSPs) and processors based on multicore processor architecture, as non-limiting examples. The apparatus 400 may have multiple processors, such as for example an application specific integrated circuit chip that is slaved in time to a clock which synchronizes the main processor.

Further, according to different implementations, the present disclosure also provides a computer program, comprising instructions which, when executed on at least one processor, e.g., the processor 401, cause the at least one processor to carry out the methods according to the examples given in the present disclosure.

In addition, the present disclosure provides a carrier containing the computer program as mentioned above, wherein the carrier is one of an electronic signal, optical signal, radio signal, or computer readable storage medium.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of establishing a connection between a low complexity user equipment and a network node within a wireless communication network comprising the steps of:
receiving information broadcast from said network node;
determining from said information whether said network node is configured to support communications with said low complexity user equipment;
in response to detecting that said network node is not configured to support said low complexity user equipment communication:
selecting a reduced capability of said user equipment to transmit in a user capability message to said network node such that configuration information transmitted to said user equipment relating to said user equipment capability has a correspondingly reduced size; and
transmitting said user capability message to said network node.

2. A method according to claim 1, wherein said reduced capability comprises a subset of bands supported by said user equipment, said subset of bands including a band comprising a carrier frequency of said network node.

3. A method according to any preceding claim, wherein said step of transmitting is performed in response to an enquiry received from said network node regarding a capability of said user equipment, said reduced capability being selected such that a response to said user equipment capability message has a correspondingly reduced size.

4. A method according to claim 3, wherein said step of selecting said reduced capability comprises selecting a subset of bands supported by said user equipment such that said response comprising configuration information of said subset of bands is less than a predetermined size.

5. A method according to claim 4, wherein said predetermined size is at least one of a buffer size of said user equipment and 1000 bits.

6. A method according to any preceding claim, wherein said step of selecting a subset of bands comprises: not selecting at least one of carrier aggregation and inter-RAT band combinations.

7. A method according to any preceding claim, comprising in response to detecting a target cell and prior to leaving a cell of said network node performing a detach procedure whereby a connection to said wireless communication network is released and said user equipment capability stored in said wireless communication network is cleared.

8. A method according to claim 7, comprising following performing said detach procedure, performing said steps of said method according to claim 1 for a network node of said target cell, and in response to detecting that said network node does support said communication of said low complexity user equipment transmitting a full capability of said user equipment to said network node.

9. A method according to any one of claims 1 to 6, comprising in response to detecting a target cell, performing an attach procedure to attach to a network node of said target cell, said attach procedure comprising transmitting a user equipment capability to said network node of said target cell.

10. A method according to claim 9, wherein said step of detecting said target cell comprises detecting a carrier signal from said target cell in a frequency associated with a band outside of said reduced user equipment capability, and said step of performing said attach procedure comprises transmitting an updated user equipment capability to said new network node comprising a band that includes said frequency of said carrier signal.

11. A method according to any one of claims 1 to 6, comprising following handover to a new network node, determining whether said new network node is configured to support communication with low complexity user equipment and if so, performing an attach procedure to said new network node, said attach procedure comprising transmitting full user equipment capability.

12. A method according to claim 11, comprising prior to performing said attach procedure performing a detach procedure.

13. A computer program which when executed by a computer is operable to control said computer to perform steps in a method according to any one of claims 1 to 12.

14. A low complexity user equipment comprising:
a receiver for receiving information broadcast from a network node;
determination circuitry operable to determine from said information whether said network node is configured to support communications with said low complexity user equipment;
control circuitry operable in response to detecting that said network node is not configured to support said low complexity user equipment communication to select a reduced capability of said user equipment to transmit in a user capability message to said network node such that configuration information transmitted to said user equipment relating to said user equipment capability has a correspondingly reduced size; and
transmission circuitry for transmitting said user capability message to said network node.

15. User equipment according to claim 14, wherein said reduced capability comprises a subset of communication bands supported by said user equipment, said subset of communication bands including a communication band comprising a carrier frequency of said network node.

## Amended claims

### Amended claims in accordance with Rule 137(2) EPC.

1. A method of establishing a connection between a low complexity user equipment (50) and a network node (20) within a wireless communication network comprising the steps of:
receiving information broadcast from said network node (20) ;
determining from said information whether said network node is configured to support communications with said low complexity user equipment (50);
in response to detecting that said network node is not configured to support said low complexity user equipment communication:
selecting a reduced capability of said user equipment (50) to transmit in a user capability message to said network node such that configuration information transmitted to said user equipment relating to said user equipment capability has a correspondingly reduced size; and
transmitting said user capability message to said network node (20).

2. A method according to claim 1, wherein said reduced capability comprises a subset of bands supported by said user equipment, said subset of bands including a band comprising a carrier frequency of said network node.

3. A method according to any preceding claim, wherein said step of transmitting is performed in response to an enquiry received from said network node regarding a capability of said user equipment, said reduced capability being selected such that a response to said user equipment capability message has a correspondingly reduced size.

4. A method according to claim 3, wherein said step of selecting said reduced capability comprises selecting a subset of bands supported by said user equipment such that said response comprising configuration information of said subset of bands is less than a predetermined size.

5. A method according to claim 4, wherein said predetermined size is at least one of a buffer size of said user equipment and 1000 bits.

6. A method according to any preceding claim, wherein said step of selecting a subset of bands comprises: not selecting at least one of carrier aggregation and inter-RAT band combinations.

7. A method according to any preceding claim, comprising in response to detecting a target cell and prior to leaving a cell of said network node performing a detach procedure whereby a connection to said wireless communication network is released and said user equipment capability stored in said wireless communication network is cleared.

8. A method according to claim 7, comprising following performing said detach procedure, performing said steps of said method according to claim for a network node of said target cell, and in response to detecting that said network node does support said communication of said low complexity user equipment transmitting a full capability of said user equipment to said network node.

9. A method according to any one of claims 1 to 6, comprising in response to detecting a target cell, performing an attach procedure to attach to a network node of said target cell, said attach procedure comprising transmitting a user equipment capability to said network node of said target cell.

10. A method according to claim 9, wherein said step of detecting said target cell comprises detecting a carrier signal from said target cell in a frequency associated with a band outside of said reduced user equipment capability, and said step of performing said attach procedure comprises transmitting an updated user equipment capability to said new network node comprising a band that includes said frequency of said carrier signal.

11. A method according to any one of claims 1 to 6, comprising following handover to a new network node, determining whether said new network node is configured to support communication with low complexity user equipment and if so, performing an attach procedure to said new network node, said attach procedure comprising transmitting full user equipment capability.

12. A method according to claim 11, comprising prior to performing said attach procedure performing a detach procedure.

13. A computer program which when executed by a computer is operable to control said computer to perform steps in a method according to any one of claims 1 to 12.

14. A low complexity user equipment (50) comprising:
a receiver for receiving information broadcast from a network node (20);
determination circuitry operable to determine from said information whether said network node is configured to support communications with said low complexity user equipment;
control circuitry operable in response to detecting that said network node (20) is not configured to support said low complexity user equipment (50) communication to select a reduced capability of said user equipment (50) to transmit in a user capability message to said network node (20) such that configuration information transmitted to said user equipment (50) relating to said user equipment capability has a correspondingly reduced size; and
transmission circuitry for transmitting said user capability message to said network node (20).

15. User equipment according to claim 14, wherein said reduced capability comprises a subset of communication bands supported by said user equipment, said subset of communication bands including a communication band comprising a carrier frequency of said network node.
